# EUROPEAN PATENT SPECIFICATION

(11) **EP 1 857 733 B1**
(45) Date of publication and mention of the grant of the patent: **22.07.2009**
(21) Application number: 07009144.2
(22) Date of filing: 07.05.2007
(51) Int. Cl.: F21V 1/00, F21V 1/26, B44F 1/06, F21V 1/16, B32B 17/06

(54) **Lampshade**
Lampenschirm
Abat-jour

(30) Priority: 17.05.2006 IT VR20060086
(43) Date of publication of application: 21.11.2007
(73) Proprietor: Janus S.R.L., 37010 Sant'Ambrogio Valpolicella VR (IT)
(72) Inventor: Fedrigoli, Pietro Lorenzo, 37010 Sant'Ambrogio di Valpolicella (Verona) (IT)
(74) Representative: Alagem Modiano, Lara S.

(56) References cited:
- DE-A1- 10 109 425
- DE-A1- 19 731 228
- DE-U1- 20 107 714
- FR-A3- 2 728 955
- GB-A- 2 289 008
- GB-A- 2 406 295

## Description

The present invention relates to a lampshade.

As is known, lampshades generally applied to lamps to cover their light sources are constituted substantially by a frame which supports an optical screen typically made of fabric, glass or plastics.

FR 2728955 discloses a lampshade for a localised light source, which has a supporting frame with two arms and a fixing device on the base for receiving a light source. A transparent tapered envelope having motifs formed on it is connected to the arms. The lamp shade further has a coneshaped translucent screen made from a sheet of polyvinylchloride material which extends from the arms and has an axial length sufficient for filtering light from the light source towards the motifs.

Lamps are also known in which plates of marble or of another stone material, having a thickness adapted to allow the passage of light, are used as lampshades in order to create pleasant light effects.

Such plates are generally coupled to the body of the lamp by inserting with play their peripheral portion in a receptacle defined on the body itself of the lamp between two opposite abutments.

However, this solution does not offer sufficient safety against accidental disengagement of the plates from the body of the lamp.

Moreover, plates of the type described above, in order to avoid being too fragile, are provided with the maximum thickness which allows to have in any case the required optical semitransparency.

Accordingly, such plates are rather heavy and therefore the body of the lamp that has to support them is usually oversized, with an obvious cost increase.

The aim of the present invention is to solve the drawbacks described above by providing a lampshade which is capable of creating the same optical effects as stone plates but at the same time is considerably lighter than said plates and can also be fixed to the body of the lamp much more stably and safely.

Within this aim, another object of the invention is to provide a lampshade which is capable of covering adequately the light source of the lamp even on multiple sides.

Still another object of the present invention is to provide a lampshade which can be obtained easily starting from commonly commercially available elements and materials and is also competitive from a merely economical standpoint.

This aim and these and other objects, which will become better apparent hereinafter, are achieved by a lampshade according to claim 1, comprising a supporting frame which can be associated with the body of a lamp and supports an optical screen which is substantially translucent and is designed to face at least one light source which is connected to the body of said lamp, characterized in that said optical screen comprises at least two plate-like elements which are mutually joined at an edge and are arranged at an angle to each other, each of said plate-like elements comprising a supporting layer, which is directed toward said at least one light source, and a layer of stone material, which is coupled to said supporting layer and is directed away from said at least one light source, at least one anchoring element being provided which is adapted to connect said optical screen to said supporting frame, said at least one anchoring element being connected mechanically to the supporting layer of at least one of said plate-like elements.

Further characteristics and advantages of the invention will become better apparent from the description of some preferred but not exclusive embodiments of the lampshade according to the invention, illustrated by way of non-limiting example in the accompanying drawings, wherein:
Figure 1 is a perspective view of an optical screen which can be used in a possible embodiment of the lampshade according to the invention;
Figure 2 is a top plan view of the optical screen of Figure 1;

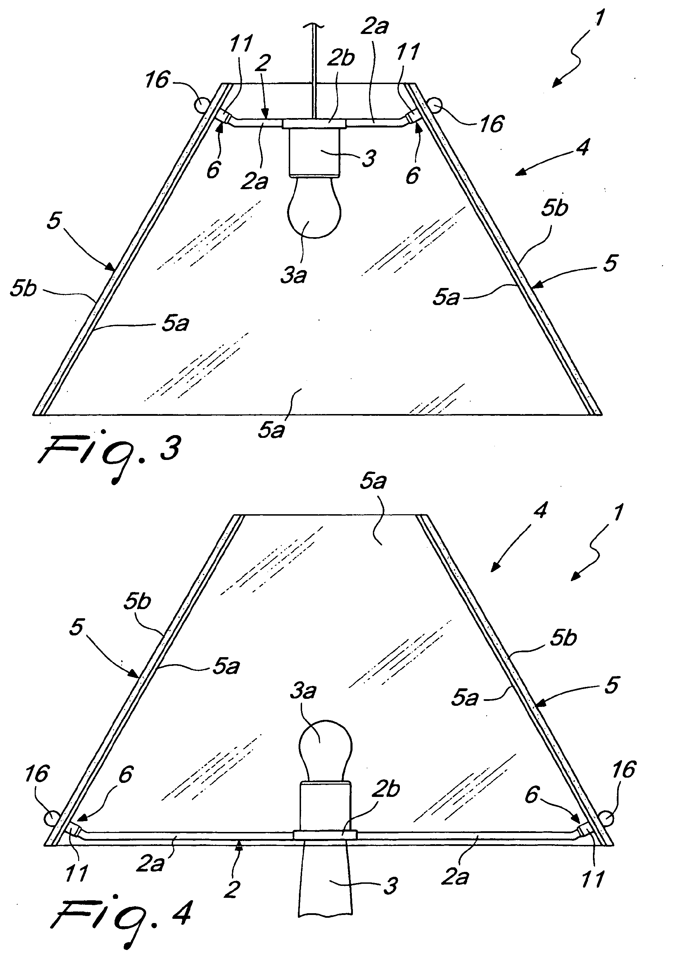

Figure 3 is a longitudinal sectional view of an embodiment of the lampshade according to the invention, applied to the body of a ceiling lamp;
Figure 4 is a longitudinal sectional view of a possible use of the optical screen shown in Figures 1 and 2;
Figure 5 is a longitudinal sectional view of another embodiment of the invention;
Figure 6 is a longitudinal sectional view of another embodiment of the invention, taken along a plane which passes through opposite corner regions of the optical screen;
Figure 7 is a partially exploded enlarged-scale transverse sectional view of a detail of the embodiment of Figure 5;
Figure 8 is an enlarged-scale transverse sectional view, with parts shown in exploded view, of a detail of the embodiment shown in Figure 4;
Figure 9 is an enlarged-scale transverse sectional view of a detail of the variation of Figure 6;
Figure 10 is a sectional view, taken along the line X-X of Figure 9;
Figure 11 is an exploded perspective view of the variation of Figure 9;
Figure 12 is a front elevation view of an initial plate-like element for providing an optical screen which can be used by the lampshade according to the invention;
Figure 13 is a front elevation view of the plate-like element of Figure 12 after the provision of a cut to obtain the selected shape and the provision of receptacles for respective anchoring elements;
Figure 14 is a sectional view of an edge of the plate-like element of Figure 13 after the provision of an inclined milling;
Figure 15 is a sectional view of two plate-like elements joined at an angle to provide an optical screen;
Figure 16 is a longitudinal sectional view of another variation with respect to the embodiments of the preceding figures;
Figure 17 is a perspective view, with parts shown in cross-section, of a detail of another possible variation of the lampshade according to the invention.

With reference to the figures, the lampshade according to the invention, generally designated by the reference numeral 1, comprises a supporting frame 2, which can be associated in a per se known manner with the body of a lamp 3.

The supporting frame 2 supports an optical screen 4, which is substantially translucent and is designed to face at least one light source 3a of any kind, which is connected to the body of the lamp 3.

Preferably, the supporting frame 2 comprises one or more connecting arms 2a, which protrude laterally from a supporting ring 2b which can be coupled to the body of the lamp 3.

According to the invention, the optical screen 4 comprises at least two plate-like elements 5, which are mutually joined at an edge and are arranged at an angle to each other so as to define a corner region.

Each of the plate-like elements 5 is formed by a supporting layer 5a, which is designed to be directed toward the light source 3a, and by a layer of stone material 5b, which is coupled to the supporting layer 5a and is directed in the opposite direction with respect to the light source 3 a.

Advantageously, the supporting layer 5a is constituted by a plate having a thickness preferably ranging from 1 to 8 mm, made of glass or transparent plastics, such as for example polycarbonate, methacrylate, PVC or Plexiglas, so as to act effectively as a reinforcement and support element for the layer of stone material 5b, which is preferably provided by means of a plate of marble or the like which can optionally be decorated by coloring, engraving or other, and conveniently has a thickness ranging substantially from 3 to 5 mm, so as to be substantially transparent to light.

Preferably, the plates which provide respectively the supporting layer 5a and the layer of stone material 5b are mutually coupled by interposing a layer of binding material, which can be constituted for example by an epoxy or polyurethane resin.

As shown in the figures, the optical screen 4 conveniently has a tubular shape which tapers for example toward one end and is constituted in particular by a plurality of plate-like elements 5, which are arranged around the light source 3a.

Also according to the invention, one or more anchoring elements 6 are provided which are designed to allow, preferably by interposing connection means of the male and female type, the connection of the optical screen 4 to the supporting frame 2.

In particular, each anchoring element 6 is connected mechanically to the supporting layer 5a of at least one of the plate-like elements 5.

More particularly, each anchoring element 6 is provided advantageously with at least one connecting portion which is designed to engage a corresponding receptacle 7 defined in the supporting layer 5a of at least one respective plate-like element 5.

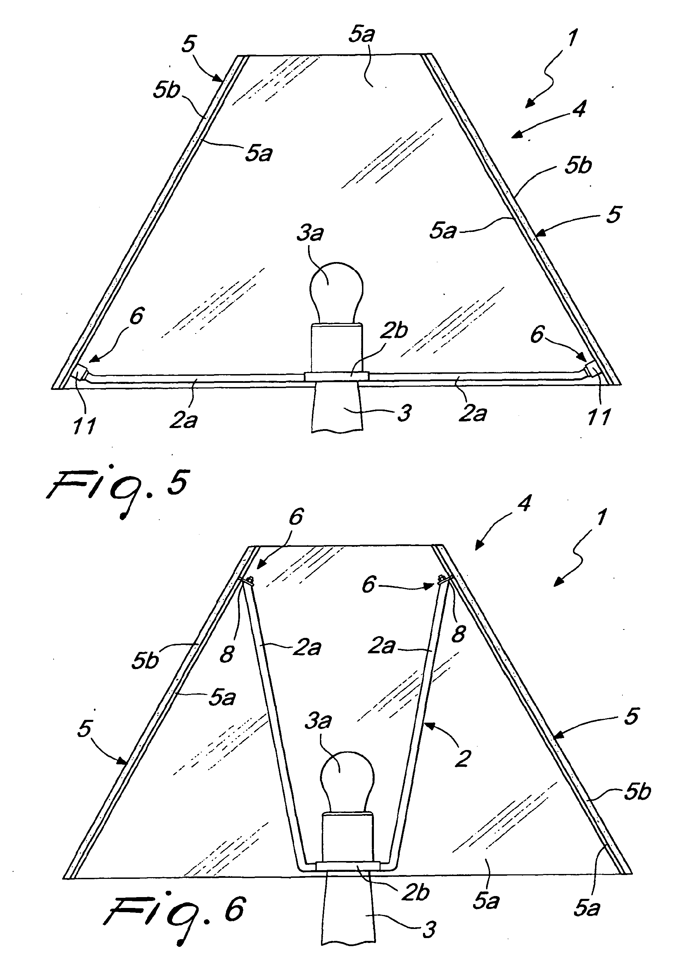

With particular reference to the embodiment shown in Figures 6, 9, 10 and 11, advantageously the anchoring elements 6 are arranged substantially at at least one of the corner regions of the optical screen 4 which are defined between two contiguous plate-like elements 5.

In this case, the anchoring elements 6 can be provided conveniently by a plate 8 which engages with a peripheral portion the receptacle 7, which is constituted by a notch defined in the supporting layer 5a which straddles the corner region defined between two contiguous plate-like elements 5, so that the anchoring element 6 can connect to both plate-like elements 5 which provide the corner region.

Advantageously, the plate 8 is fixed to the supporting layer 5a of the two contiguous plate-like elements 5 by interposing adhesive material, such as for example an epoxy or polyurethane resin.

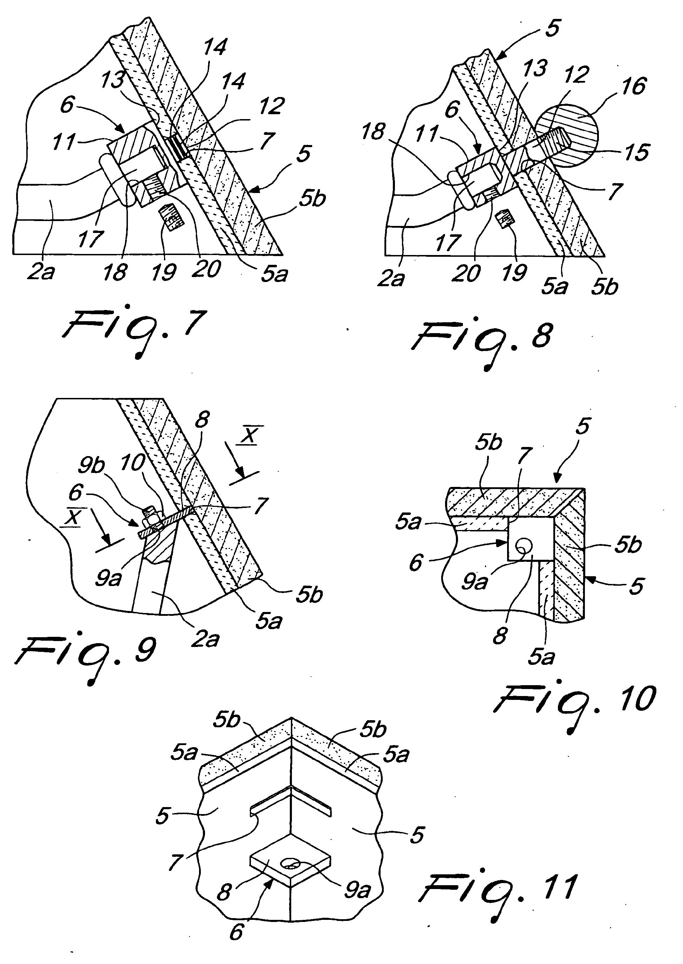

As shown in Figure 9, the connection between the plate 8 and the supporting frame 2 is ensured advantageously by said male and female connection means, which can be for example of the removable type and which at least in this case can be constituted conveniently by an opening 9b which is defined in the plate 8 and is designed to accommodate a threaded pin 9a, which is fixed to the free end of a corresponding connecting arm 2a and can be engaged by a locking nut 10.

In another possible embodiment of the invention, each anchoring element 6 is constituted by a substantially cylindrical connecting body 11, which at one of its axial ends is associated with the supporting layer 5a of a corresponding plate-like element 5, not necessarily proximate to a corner region of the optical screen 4.

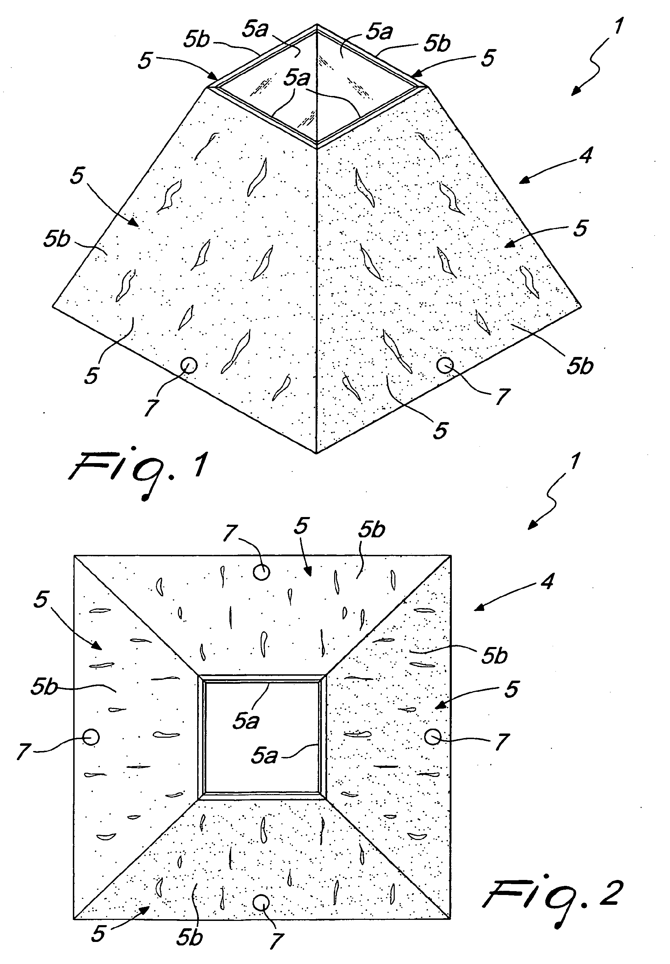

In this embodiment, the connecting portion of the anchoring element 6 is provided advantageously by a fixing pin 12, which protrudes axially from the connecting body 11, and the corresponding receptacle 7 is provided by a recess, which can cross only the supporting layer 5a, as in the example of Figure 7, or can pass through the entire thickness of the plate-like element 5, as shown in particular by Figures 1, 2 and 8.

Advantageously, the fixing pin 12 has a smaller transverse dimension than the connecting body 11, so as to define on the connecting body 11 a shoulder region 13 which is directed toward the fixing pin 12 and abuts against the supporting layer 5a of the corresponding plate-like element 5.

The connecting body 11 can be fixed for example to the supporting layer 5a by using an adhesive material, such as an epoxy or polyurethane resin. In this case, the adhesive material is arranged preferably both in the receptacle 7, so as to grip the fixing pin 12, and between the shoulder region 13 and the supporting layer 5a, so as to ensure a more stable and safe connection. As shown in Figure 7, the fixing pin 12 can be provided conveniently on its lateral surface with one or more annular grooves 14, in which the excess adhesive material can be collected, so as to achieve increased locking of the fixing pin 12 in the receptacle 7.

As an alternative, if the receptacle 7 passes through the thickness of the plate-like element 5, as shown in particular in Figure 8, the fixing pin 12 may also have, at its free end, a threaded portion 15 which protrudes from the receptacle 7 and is engaged by a retention element 16, which allows to lock the connecting body 11.

Conveniently, at its axial end which lies opposite the end connected to the supporting layer 5a of the corresponding plate-like element 5, the connecting body 11 can be connected to the supporting frame 2 by way of the male and female connection means, which in this case are constituted preferably by a male element 17, which is supported by a corresponding connecting arm 2a, and by a female receptacle 18, which is defined coaxially with respect to the connecting body 11 and can be engaged by the male element 17.

Conveniently, it is also possible to provide removable locking means, which are designed to ensure a stable connection of the male element 17 in the female receptacle 18 and can be constituted for example by a locking grub screw 19, which can be screwed into a threaded hole 20 which intersects the female receptacle 18 in order to allow the engagement of the locking grub screw 19 with the male element 20.

It should also be added that the anchoring elements 6 can be conveniently provided by using a transparent plastic material, so that they are scarcely visible.

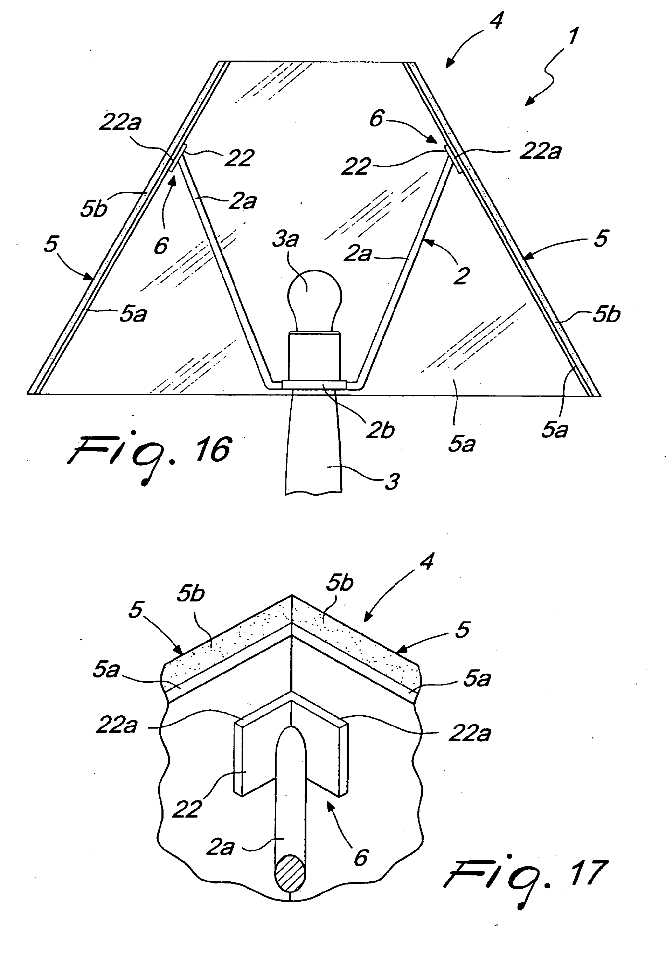

With reference to Figures 16 and 17, it can be seen that in an additional possible different embodiment, the anchoring elements 6 can be constituted by an abutment body 22, which defines at least one flat face 22a which is designed to face, and be fixed to, the outer surface of the supporting layer 5a of at least one of the plate-like elements 5 that compose the optical screen 4 by interposing an adhesive material.

Among the adhesive materials which can be used for this purpose, it is possible to mention, merely by way of non-limiting example, epoxy adhesives and more particularly epoxy adhesives capable of reacting to UV rays, which have proved to be adapted to ensure firm and durable adhesive bonding even if the abutment body 22 is made of metallic material or polycarbonate and the supporting layer 5a of the plate-like elements 5 is made of glass.

Preferably, the abutment body 22 is plate-shaped and can be for example fixed rigidly to the supporting frame 2 and more particularly to the end of a corresponding connecting arm 2a. The abutment body 22 might also be connected to the frame 2 by way of connection means of the male and female type, provided in a manner similar to the preceding examples.

As shown in Figure 17, the plate that provides the abutment body 22 can be shaped at an angle so as to define two flat supporting surfaces 22a, each of which is designed to engage the supporting layer 5a of a respective plate-like element 5 at a corner region of the optical screen 4.

For the sake of completeness in description and merely by way of non-limiting example, one possible method for providing the lampshade according to the invention can be as follows.

Initially, the plate-like elements 5 are provided by coupling, by using adhesive material, a sheet of glass or transparent plastic material, which provides the supporting layer 5a, to a plate of marble or other stone material, which instead defines the layer of stone material 5b, as explained above.

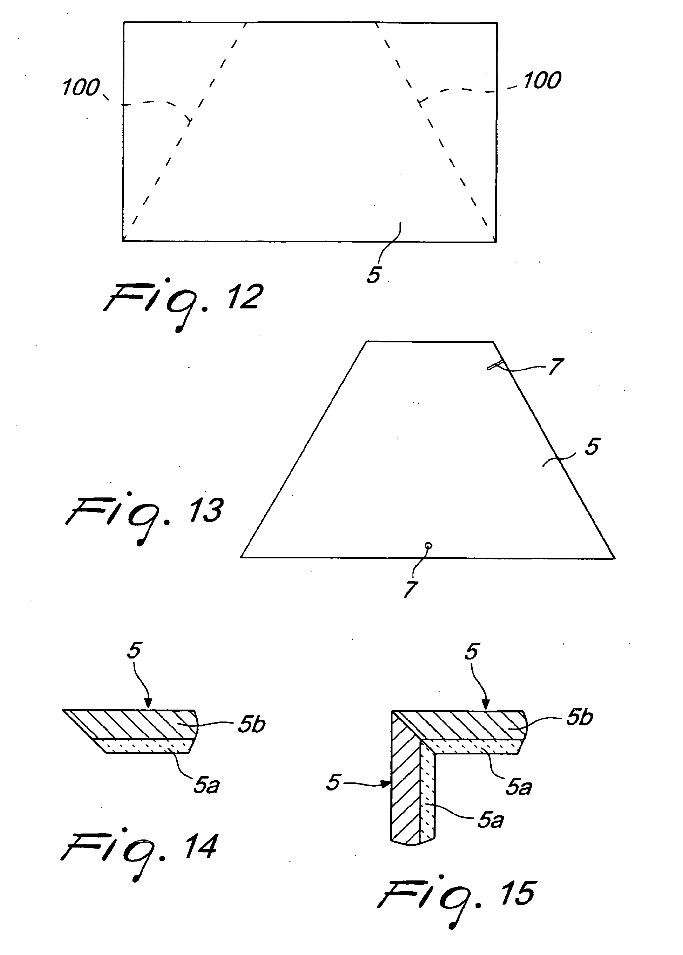

The plate-like elements 5 are optionally subjected to cutting processes in order to obtain the selected shape, such as for example the trapezoidal shape shown in Figure 13, which can be provided by forming inclined cuts along the cutting lines 100, as shown schematically in Figure 12.

At this point, one or more receptacles 7 are provided in the supporting layer 5a of the plate-like elements 5 by milling, if the receptacle 7 is constituted by a notch, or by drilling, if the receptacle 7 is instead constituted by a hollow which passes partially or completely through the thickness of the plate-like element 5.

Subsequently, as shown in Figure 14, an inclined milling is provided at the edges of the plate-like elements 5 designed to be coupled to each other, in order to allow the provision of the corner regions of the optical screen 4.

The plate-like elements 5 are then joined at an angle, as shown in Figure 15, and are connected to each other by adhesive bonding, preferably using an adhesive which can be activated by UV rays.

At this point, the connecting portions of the various anchoring elements 6 are inserted in the respective receptacles 7 and are fixed to the plate-like elements 5 as described previously.

Subsequently it is possible also to polish the outer edges of the resulting optical screen 4.

The lampshade is then completed by joining the supporting frame 2 and more particularly the various connecting arms 2a to the anchoring elements 6 by way of the male and female connecting means described earlier.

The use of the lampshade according to the invention is evident from what has been described and illustrated. In particular, it is evident that thanks to its particular structure it is much lighter than current marble lampshades.

Moreover, it should be noted that due to the anchoring elements 6 the forces that act between the optical screen 4 and the supporting frame 2 discharge mainly onto the supporting layer 5a, thus achieving a reduction in the stresses transmitted to the layer of stone material 5b, which accordingly can be provided with much lower thicknesses, thus having better light diffusion and limited manufacturing costs.

In practice it has been found that the invention achieves, in all its embodiments, the intended aim and objects, and in particular the fact is stressed that the invention allows to provide lampshades which have all the aesthetic advantages that arise from the use of stone material and at the same time are capable of having, with respect to the background art, an optimum mechanical connection between the optical screen and its supporting frame, since besides being more stable and safe it allows the stresses generated in the connecting points between the supporting frame and the optical screen to discharge predominantly onto the supporting layer of the plate-like elements instead of onto the layer of stone material, as described above.

Moreover, it is important to stress that the lampshade according to the invention also has the advantage of being extremely light, although it is still very strong, since it can be provided by using marble plates of very low thickness coupled to glass sheets.

In addition to this, if plates of plastic material are used instead of glass plates, the lampshade according to the invention can be even lighter, with the consequent advantage of allowing the manufacture of lamps which otherwise would not be feasible with current plates made of marble alone, which are heavier.

All the characteristics of the invention indicated above as advantageous, convenient or the like may also be omitted or be replaced with equivalents.

The individual characteristics presented with reference to general teachings or particular embodiments may all be present in other embodiments or may replace characteristics in such embodiments.

The invention thus conceived is susceptible of numerous modifications and variations, all of which are within the scope of the appended claims.

In practice, the materials used, so long as they are compatible with the specific use, as well as the shapes and dimensions, may be any according to requirements.

All the details may further be replaced with other technically equivalent elements.

The disclosures in Italian Patent Application No. VR2006A000086 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A lampshade (1) comprising a supporting frame (2) which can be associated with the body of a lamp (3) and supports an optical screen (4) which is substantially translucent and is designed to face at least one light source (3a) which is connected to the body of said lamp (3), **characterized in that** said optical screen (4) comprises at least two plate-like elements (5) which are mutually joined at an edge and are arranged at an angle to each other, each of said plate-like elements (5) comprising a supporting layer (5a), which is directed toward said at least one light source (3a), and a layer of stone material, which is coupled to said supporting layer (5b) and is directed away from said at least one light source (3a), at least one anchoring element (6) being provided which is adapted to connect said optical screen (4) to said supporting frame (2), said at least one anchoring element (6) being connected mechanically to the supporting layer of at least one of said plate-like elements (5).

2. The lampshade (1) according to claim 1, **characterized in that** said at least one anchoring element (6) is arranged substantially at the corner region defined between said plate-like elements (5).

3. The lampshade (1) according to one or more of the preceding claims, **characterized in that** it comprises means of the male (17) and female (18) type for connection between said at least one anchoring element (6) and said supporting frame (2).

4. The lampshade (1) according to one or more of the preceding claims, **characterized in that** said at least one anchoring element (6) has at least one connecting portion which engages a corresponding receptacle (7) which is defined in the supporting layer (5a) of said at least one of said plate-like elements (5).

5. The lampshade (1) according to one or more of the preceding claims, **characterized in that** said at least one anchoring element (6) is fixed to the supporting layer (5a) of said at least one of said plate-like elements (5) by interposing adhesive material.

6. The lampshade (1) according to one or more of the preceding claims, **characterized in that** said at least one anchoring element (6) comprises a plate (8), said receptacle (7) comprising a notch which straddles the corner region defined between said plate-like elements (5) and is adapted to accommodate a peripheral portion of said plate (8).

7. The lampshade (1) according to one or more of the preceding claims, **characterized in that** said at least one anchoring element (6) comprises an abutment body (22) which defines at least one flat supporting face (22a) which is adapted to engage the outer surface of the supporting layer (5a) of said at least one of said plate-like elements (5).

8. The lampshade (1) according to one or more of the preceding claims, **characterized in that** said at least one anchoring element (6) comprises a substantially cylindrical connecting body (11), which is associated, at one of its axial ends, with the supporting layer (5a) of said at least one of said plate-like elements (5) and can be connected, at its other axial end, to said supporting frame (2) by way of said male and female connection means.

9. The lampshade (1) according to one or more of the preceding claims, **characterized in that** said at least one connecting portion comprises a fixing pin (12) which protrudes axially from said connecting body (11).

10. The lampshade (1) according to one or more of the preceding claims, **characterized in that** said fixing pin (12) has a transverse dimension smaller than said connecting body (11) in order to define, on said connecting body (11), a shoulder region (13) which is directed toward said fixing pin (12) and is designed to abut against the supporting layer (5a) of said at least one of said plate-like elements (5).

11. The lampshade (1) according to one or more of the preceding claims, **characterized in that** said receptacle (7) passes through the thickness of said at least one of said plate-like elements (5), said at least one fixing pin (12) having, at its free end, a threaded portion (15) which protrudes from said receptacle (7) and engages a retention element (16) which is adapted to lock said at least one engagement element.

12. The lampshade (1) according to one or more of the preceding claims, **characterized in that** said layer of stone material (5b) is constituted by a plate of marble or the like which has a thickness substantially ranging from 3 to 5 mm.

13. The lampshade (1) according to one or more of the preceding claims, **characterized in that** said supporting layer (5a) is provided by a plate of glass or plastic material which has a thickness preferably ranging from 1 to 8 mm.

## Patentansprüche

1. Lampenschirm (1), enthaltend einen Stützrahmen (2), welcher mit dem Lampensockel (3) verbunden sein kann und einen optischen Schirm (4) trägt, welcher im Wesentlichen lichtdurchlässig ist und mindestens einer Lichtquelle (3a) gegenüberstehend angeordnet ist, welche an den Lampensockel (3) angeschlossen ist, **dadurch gekennzeichnet, dass** der optische Schirm (4) mindestens zwei plattenähnliche Elemente (5) enthält, welche miteinander an einer Kante verbunden sind und in einem Winkel zueinander angeordnet sind, wobei jedes der plattenähnlichen Elemente (5) eine Tragschicht (5a) enthält, welche der mindestens einen Lichtquelle (3a) zugekehrt ist, und eine Schicht aus Steinmaterial, welche mit der Tragschicht (5a) verbunden ist und von der mindestens einen Lichtquelle (3a) hinweggerichtet ist, wobei mindestens ein Verankerungselement (6) vorgesehen ist, welches dazu bestimmt ist, den optischen Schirm (4) mit dem Stützrahmen (2) zu verbinden, wobei das mindestens eine Verankerungselement (6) mechanisch mit der Tragschicht von mindestens einem der plattenähnlichen Elemente (5) verbunden ist.

2. Lampenschirm (1) nach Anspruch (1), **dadurch gekennzeichnet, dass** das mindestens eine Verankerungselement (6) im Wesentlichen an der zwischen den plattenähnlichen Elementen (5) gebildeten Eckregion angeordnet ist.

3. Lampenschirm (1) nach einem oder mehreren der vorangehenden Ansprüche, **dadurch gekennzeichnet, dass** er Mittel des Einstecktyps (17) und des Aufnahmetyps (18) für die Verbindung zwischen dem mindestens einen Verankerungselement (6) und dem Stützrahmen (2) umfasst.

4. Lampenschirm (1) nach einem oder mehreren der vorangehenden Ansprüche, **dadurch gekennzeichnet, dass** das mindestens eine Verankerungselement (6) mindestens ein Verbindungsteil besitzt, welches in eine entsprechende Aufnahme (7) eingreift, welche in der Tragschicht (5a) mindestens eines der plattenähnlichen Elemente (5) gebildet ist.

5. Lampenschirm (1) nach einem oder mehreren der vorangehenden Ansprüche, **dadurch gekennzeichnet, dass** das mindestens eine Verankerungselement (6) an der Tragschicht (5a) des mindestens einen der plattenähnlichen Elemente (5) durch zwischenliegendes Klebermaterial befestigt ist.

6. Lampenschirm (1) nach einem oder mehreren der vorangehenden Ansprüche, **dadurch gekennzeichnet, dass** das mindestens eine Verankerungselement (6) eine Platte (8) umfasst, wobei die Aufnahme (7) einen Schlitz enthält, welcher die zwischen den plattenähnlichen Elementen (5) gebildete Eckregion spreizt und dazu bestimmt ist einen Umfangsbereich der Platte (8) aufzunehmen.

7. Lampenschirm (1) nach einem oder mehreren der vorangehenden Ansprüche, **dadurch gekennzeichnet, dass** das mindestens eine Verankerungselement (6) einen Auflagerkörper (22) umfasst, welcher mindestens eine flache Tragfläche (22a) bildet, welche dazu bestimmt ist an die Außenfläche der Tragschicht (5a) des mindestens einen der plattenähnlichen Elemente (5) anzugreifen.

8. Lampenschirm (1) nach einem oder mehreren der vorangehenden Ansprüche, **dadurch gekennzeichnet, dass** das mindestens eine Verankerungselement (6) einen im Wesentlichen zylindrischen Verbindungskörper (11) umfasst, welcher an einem seiner axialen Enden mit der Tragschicht (5a) des mindestens einen der plattenähnlichen Elemente (5) verbunden ist und an seinem anderen axialen Ende an den Stützrahmen (2) durch die Einsteck- und Aufnahme-verbindungsmittel angeschlossen sein kann.

9. Lampenschirm (1) nach einem oder mehreren der vorangehenden Ansprüche, **dadurch gekennzeichnet, dass** das mindestens eine Verbindungsteil einen Befestigungsbolzen (12) enthält, welcher axial von dem Verbindungskörper (11) vorspringt.

10. Lampenschirm (1) nach einem oder mehreren der vorangehenden Ansprüche, **dadurch gekennzeichnet, dass** der Befestigungsbolzen (12) eine Querabmessung hat, die kleiner als der Verbindungskörper (11) ist, um an dem Verbindungskörper (11) einen Schulterbereich (13) zu bilden, welcher dem Befestigungsbolzen (12) zugekehrt ist und zum Anliegen an der Tragschicht (5a) des mindestens einen der plattenähnlichen Elemente (5) ausgebildet ist.

11. Lampenschirm (1) nach einem oder mehreren der vorangehenden Ansprüche, **dadurch gekennzeichnet, dass** sich die Aufnahme (7) durch die Dicke des mindestens einen der plattenähnlichen Elemente (5) hindurcherstreckt, wobei der mindestens eine Befestigungsbolzen (12) an seinem freien Ende einen Gewindebereich (15) aufweist, welcher von der Aufnahme (7) vorspringt und an ein Halteelement (16) angreift, welches dazu bestimmt ist, das mindestens eine Eingriffselement festzulegen.

12. Lampenschirm (1) nach einem oder mehreren der vorangehenden Ansprüche, **dadurch gekennzeichnet, dass** die Schicht aus Steinmaterial (5b) von einer Platte aus Marmor oder dergleichen gebildet ist, welche eine Dicke aufweist, die sich im Wesentlichen von 3 bis 5 mm erstreckt.

13. Lampenschirm (1) nach einem oder mehreren der vorangehenden Ansprüche, **dadurch gekennzeichnet, dass** die Tragschicht (5a) durch eine Platte aus Glas oder Kunststoffmaterial vorgesehen ist, welche eine Dicke aufweist, die sich vorzugsweise von 1 bis 8 mm erstreckt.

## Revendications

1. Abat-jour (1) comprenant un cadre de support (2) qui peut être associé au corps d'une lampe (3) et qui supporte un écran optique (4) qui est sensiblement translucide et qui est conçu pour faire face à au moins une source de lumière (3a) qui est reliée au corps de ladite lampe (3), **caractérisé en ce que** ledit écran optique (4) comprend au moins deux éléments semblables à des plaques (5) qui sont joints l'un à l'autre au niveau d'un bord et qui sont agencés selon un angle l'un par rapport à l'autre, chacun desdits éléments semblables à des plaques (5) comprenant une couche de support (5a), qui est dirigée vers ladite au moins une source de lumière (3a), et une couche de matériau en pierre, qui est accouplée à ladite couche de support (5b) et qui est dirigée à l'opposé de ladite au moins une source de lumière (3a), au moins un élément d'ancrage (6) étant prévu, lequel est adapté pour relier ledit écran optique (4) audit cadre de support (2), ledit au moins un élément d'ancrage (6) étant relié mécaniquement à la couche de support d'au moins l'un desdits éléments semblables à des plaques (5).

2. Abat-jour (1) selon la revendication 1, **caractérisé en ce que** ledit au moins un élément d'ancrage (6) est agencé sensiblement dans la région de coin définie entre lesdits éléments semblables à des plaques (5).

3. Abat-jour (1) selon une ou plusieurs des revendications précédentes, **caractérisé en ce qu'**il comprend des moyens du type mâle (17) et du type femelle (18) pour une liaison entre ledit au moins un élément d'ancrage (6) et ledit cadre de support (2).

4. Abat-jour (1) selon une ou plusieurs des revendications précédentes, **caractérisé en ce que** ledit au moins un élément d'ancrage (6) comporte au moins une partie de liaison qui vient en prise avec un réceptacle (7) correspondant qui est défini dans la couche de support (5a) dudit au moins un desdits éléments semblables à des plaques (5).

5. Abat-jour (1) selon une ou plusieurs des revendications précédentes, **caractérisé en ce que** ledit au moins un élément d'ancrage (6) est fixé à la couche de support (5a) dudit au moins un desdits éléments semblables à des plaques (5) par l'interposition d'un matériau adhésif.

6. Abat-jour (1) selon une ou plusieurs des revendications précédentes, **caractérisé en ce que** ledit au moins un élément d'ancrage (6) comprend une plaque (8), ledit réceptacle (7) comprenant une encoche qui enjambe la région de coin définie entre lesdits éléments semblables à des plaques (5) et qui est adaptée pour recevoir une partie périphérique de ladite plaque (8).

7. Abat-jour (1) selon une ou plusieurs des revendications précédentes, **caractérisé en ce que** ledit au moins un élément d'ancrage (6) comprend un corps de butée (22) qui définit au moins une face de support (22a) plate qui est adaptée pour venir en prise avec la surface extérieure de la couche de support (5a) dudit au moins un desdits éléments semblables à des plaques (5).

8. Abat-jour (1) selon une ou plusieurs des revendications précédentes, **caractérisé en ce que** ledit au moins un élément d'ancrage (6) comprend un corps de liaison (11) sensiblement cylindrique, qui est associé, à l'une de ses extrémités axiales, à la couche de support (5a) dudit au moins un desdits éléments semblables à des plaques (5) et qui peut être relié, à son autre extrémité axiale, audit cadre de support (2) au moyen desdits moyens de liaison mâle et femelle.

9. Abat-jour (1) selon une ou plusieurs des revendications précédentes, **caractérisé en ce que** ladite au moins une partie de liaison comprend une broche de fixation (12) qui fait saillie axialement dudit corps de liaison (11).

10. Abat-jour (1) selon une ou plusieurs des revendications précédentes, **caractérisé en ce que** ladite broche de fixation (12) a une dimension transversale plus petite que ledit corps de liaison (11) afin de définir, sur ledit corps de liaison (11), une région d'épaulement (13) qui est dirigée vers ladite broche de fixation (12) et qui est conçue pour venir en butée contre la couche de support (5a) dudit au moins un desdits éléments semblables à des plaques (5).

11. Abat-jour (1) selon une ou plusieurs des revendications précédentes, **caractérisé en ce que** ledit réceptacle (7) traverse l'épaisseur dudit au moins un desdits éléments semblables à des plaques (5), ladite au moins une broche de fixation (12) comportant, à son extrémité libre, une partie filetée (15) qui fait saillie dudit réceptacle (7) et qui vient en prise avec un élément de retenue (16) qui est adapté pour verrouiller ledit au moins un élément de mise en prise.

12. Abat-jour (1) selon une ou plusieurs des revendications précédentes, **caractérisé en ce que** ladite couche de matériau en pierre (5b) est constituée par une plaque de marbre ou similaire qui a une épaisseur allant sensiblement de 3 à 5 mm.

13. Abat-jour (1) selon une ou plusieurs des revendications précédentes, **caractérisé en ce que** ladite couche de support (5a) est réalisée par une plaque de verre ou de matière plastique qui a une épaisseur allant de préférence de 1 à 8 mm.
